# EUROPEAN PATENT APPLICATION

(11) **EP 4 240 091 A1**
(43) Date of publication of application: **06.09.2023**
(21) Application number: 20964739.5
(22) Date of filing: 11.12.2020
(51) Int. Cl.: H04W 72/12, H04L 5/00

(54) **COMMUNICATION METHOD AND APPARATUS**

(71) Applicant: Huawei Technologies Co., Ltd., Shenzhen, Guangdong 518129 (CN)
(72) Inventor: TU, Jingxuan, Shenzhen, Guangdong 518129 (CN); FU, Xia, Shenzhen, Guangdong 518129 (CN)
(74) Representative: Epping - Hermann - Fischer
(86) International application number: PCT/CN2020/135763
(87) International publication number: WO 2022/120803

(57) **Abstract**

This application provides a communication method and apparatus. The method includes: After obtaining time-frequency domain position information of a resource element carrying a reference signal on a first carrier, a base station selects, on a second carrier, any subframe except a subframe of the resource element carrying the reference signal to send data. According to the communication method provided in embodiments of this application, the base station does not schedule the subframe of the resource element carrying the reference signal on the second carrier, so that data on the second carrier that is sent by the base station can be received by a terminal device without interference.

## Description

### TECHNICAL FIELD

This application relates to the field of communication technologies, and in particular, to a communication method and apparatus.

### BACKGROUND

A technology of sharing long term evolution and 5G-new radio (Long Term Evolution and 5G-New Radio, LNR) for frequency division duplex (Frequency Division Duplexing, FDD) is a spectrum sharing technology to implement two communication standards, that is, long term evolution (Long Term Evolution, LTE) and 5G-new radio (5G-New Radio, NR), on spectrum resources. The technology can dynamically allocate the spectrum resources based on respective requirements of LTE and NR. That is, an LTE cell and an NR cell can share resources on a same spectrum. This spectrum belongs to both the LTE cell and the NR cell, and can be considered as an overlapping area between an LTE standard spectrum and an NR standard spectrum, maximizing spectrum efficiency. However, to avoid interference, it is not allowed to send both NR data and an LTE reference signal on a same resource element (Resource Element, RE). Certainly, it is also not allowed to send both LTE data and an NR reference signal on a same RE. Therefore, an avoidance coordination technology of LNR is used in conventional technologies. In the overlapping area between the LTE standard spectrum and the NR standard spectrum, when an LTE base station sends a reference signal, for example, a channel state information reference signal (Channel State Information Reference Signal, CSI-RS), an RE carrying the LTE reference signal does not schedule the NR data, and an NR base station notifies user equipment (User Equipment, UE) in an NR system of REs of the LTE CSI-RS, so that the UE in the NR system does not expect the NR data or demodulate data in a physical downlink shared channel (Physical Downlink Shared Channel, PDSCH) on these REs.

However, when an LTE CSI-RS pattern is changed, an LTE CSI-RS RE pattern previously sent to a user needs to be reconfigured. During batch reconfiguration of the UE in the NR system, there is a fuzzy period. That is, a part of the UE in the NR system still uses LTE CSI-RS RE information before changing, and a part of the UE in the NR system uses LTE CSI-RS RE information after changing. It can be learned that, during the reconfiguration, although a new LTE CSI-RS pattern has taken effect in an LTE system, a part of the UE in the NR system still uses the LTE CSI-RS RE pattern before changing to perform avoidance. As a result, a CSI-RS of the LTE system cause interference to data transceiver of the UE in the NR system. Therefore, in a scenario of dynamic sharing between the LTE and NR spectrums, when a reference signal pattern of any one of the systems is changed, how to reduce conflicts between the LTE and NR spectrums in the fuzzy period during batch reconfiguration of users is an urgent problem to be resolved.

### SUMMARY

In view of this, embodiments of this application provide a communication method, so that a base station schedules a second carrier by avoiding a subframe in which a reference signal corresponding to a first carrier is located, thereby reducing interference caused when a resource element occupied by the reference signal corresponding to the first carrier is changed.

According to a first aspect, a communication method is provided. The method includes: After a first base station obtains time-frequency domain position information of a resource element carrying a reference signal on a first carrier, the first base station sends, in a first subframe on a second carrier, data to a terminal device, where the first subframe is any subframe except a subframe in which the resource element carrying the reference signal is located.

According to the communication method provided in this embodiment of this application, the first base station schedules the second carrier by avoiding the subframe in which the reference signal corresponding to the first carrier is located, thereby reducing interference caused when the resource element occupied by the reference signal corresponding to the first carrier is changed.

With reference to the first aspect, in some implementations of the first aspect, the first base station may obtain, by receiving a first message sent by a second base station, the time-frequency domain position information of the resource element carrying the reference signal on the first carrier.

It should be understood that, in this implementation, the second base station communicates with the terminal device through the first carrier. With reference to the first aspect, in some implementations of the first aspect, the time-frequency domain position information, obtained by the first base station, of the resource element carrying the reference signal on the first carrier may be determined by the first base station individually.

With reference to the first aspect, in some implementations of the first aspect, when the first base station determines that the time-frequency domain position information of the resource element carrying the reference signal on the first carrier is changed, the first base station sends, on any subframe except the subframe in which the resource element carrying the reference signal on the second carrier is located, data to the terminal device.

According to the communication method provided in this embodiment of this application, when the first base station shares a spectrum, if a time-frequency domain position of the resource element carrying the reference signal on the first carrier is changed, the first base station may not schedule the subframe of the resource element carrying the reference signal, to reduce interference between the changed reference signal and data on the second carrier.

With reference to the first aspect, in some implementations of the first aspect, the method further includes: After setting a corresponding resource element on the second carrier to a zero-power resource element based on the time-frequency domain position information of the resource element carrying the reference signal on the first carrier, the first base station sends a second message including time-frequency domain position information of the zero-power resource element to the terminal device, and the second message indicates the terminal device not to receive, on the zero-power resource element, data of the first base station.

According to the communication method provided in this embodiment of this application, by stopping scheduling the subframe carrying the reference signal, the first base station can reduce data receiving interference that is caused by a change of a time-frequency position of the resource element of the reference signal in a fuzzy period of batch reconfiguration of UE.

With reference to the first aspect, in some implementations of the first aspect, the method further includes: The first base station receives a third message sent by the terminal device, where the third message indicates that the terminal device has completed configuration of the zero-power resource element of the reference signal.

It should be understood that, when the first base station sends data to the terminal device, the first base station does not send data to the terminal device in the zero-power resource element. In other words, actually, the first base station sends, on a first resource element of the second carrier of the first base station, data to the terminal device. It should be understood that, the first resource element is any resource element except the resource element carrying the reference signal in the subframe in which the resource element carrying the reference signal is located.

With reference to the first aspect, in some implementations of the first aspect, the reference signal includes a channel state information reference signal CSI-RS.

According to the communication method provided in this embodiment of this application, during batch reconfiguration of users, when scheduling the second carrier, the first base station stops scheduling the subframe that is on the second carrier and that is corresponding to the resource element carrying the reference signal on the first carrier, to reduce spectrum conflicts between the first carrier and the second carrier that are caused when the resource element occupied by the reference signal is changed.

According to a second aspect, a communication apparatus is provided. The apparatus includes a processing unit and a transceiver unit. The processing unit is configured to obtain time-frequency domain position information of a resource element carrying a reference signal on a first carrier, the transceiver unit is configured to send, in a first subframe on a second carrier, data to a terminal, where the first subframe is any subframe except a subframe in which the resource element carrying the reference signal is located.

With reference to the second aspect, in some implementations of the second aspect, the transceiver unit is further configured to receive a first message sent by a second base station, where the first message includes the time-frequency domain position information of the resource element carrying the reference signal on the first carrier of the second base station.

It should be understood that, after receiving the first message, the processing unit obtains, from the first message, the time-frequency domain position information of the resource element carrying the reference signal on the first carrier.

It should be further understood that, in this implementation, the second base station communicates with a terminal device through the first carrier.

With reference to the second aspect, in some implementations of the second aspect, the time-frequency domain position information, obtained by the processing unit, of the resource element carrying the reference signal on the first carrier may be determined by the processing unit individually.

With reference to the second aspect, in some implementations of the second aspect, when the processing unit determines that the time-frequency domain position information of the resource element carrying the reference signal on the first carrier is changed, the processing unit stops, when scheduling the second carrier, scheduling the subframe of the resource element carrying the reference signal on the second carrier.

With reference to the second aspect, in some implementations of the second aspect, the processing unit of the apparatus is further configured to set a corresponding resource element on the second carrier to a zero-power resource element based on the time-frequency domain position information of the resource element carrying the reference signal on the first carrier. The transceiver unit is further configured to send a second message including time-frequency domain position information of the zero-power resource element to the terminal device, where the second message indicates the terminal device not to receive, on the zero-power resource element, data on the second carrier.

With reference to the second aspect, in some implementations of the second aspect, the transceiver unit is further configured to receive a third message sent by the terminal device, where the third message indicates that the terminal device has completed configuration of the zero-power resource element.

With reference to the second aspect, in some implementations of the second aspect, the reference signal includes a channel state information reference signal CSI-RS.

According to a third aspect, a communication apparatus is provided. A structure of the communication apparatus includes a processor. The processor is configured to support the communication apparatus in performing the functions in the first aspect or the second aspect and the implementations of the first aspect or the second aspect. In a possible design, the communication apparatus may further include a transceiver configured to support the communication apparatus in receiving or sending information.

In a possible design, the communication apparatus may further include a memory. The memory is configured to couple to the processor and store program instructions and data that are necessary for the communication apparatus.

In other words, the communication apparatus includes a memory and a processor. The memory is configured to store a computer program, and the processor is configured to invoke the computer program from the memory and run the computer program, to enable the communication apparatus to perform any communication method in the first aspect or the second aspect and the implementations of the first aspect or the second aspect.

According to a fourth aspect, a computer readable storage medium is provided. The computer readable storage medium stores a computer program, and when being executed, the computer program is used for performing the method according to any possible implementation of the first aspect or the second aspect.

According to a fifth aspect, a communication apparatus is provided, configured to perform the method according to any possible implementation of the first aspect or the second aspect.

According to a sixth aspect, a communication apparatus is provided. The communication apparatus includes at least one processor and an interface circuit. It should be understood that, a computer program in this application is executed in the at least one processor, to enable the communication apparatus to perform the method according to any possible implementation of the first aspect or the second aspect.

According to a seventh aspect, a computer program product is provided. The computer program product executes computer program code of the method according to any possible implementation of the first aspect or the second aspect.

### BRIEF DESCRIPTION OF DRAWINGS

FIG. 1 is a schematic diagram of a communication system to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic block diagram of a communication apparatus according to an embodiment of this application; and
FIG. 6 is a schematic block diagram of another communication apparatus according to an embodiment of this application.

### DESCRIPTION OF EMBODIMENTS

The following describes technical solutions of embodiments of this application with reference to accompanying drawings.

The technical solutions of embodiments of this application are mainly applied to an LNR communication system and an LNR frequency division duplexing (frequency division duplexing, FDD) system in which a 5G NR system and a 4G LTE system share a spectrum.

A terminal device in embodiments of this application may also be referred to as a terminal, and may be a device having a wireless transceiver function. The device may be deployed on the land, including an indoor or outdoor device, a handheld device, or an in-vehicle device; or may be deployed on the water (for example, on a steamer); or may be deployed in the air (for example, on an air plane, a balloon, or a satellite). The terminal device may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The UE includes a handheld device, a vehicle-mounted device, a wearable device, or a computing device that have a wireless communication function. Alternatively, the terminal device terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that have a wireless communication function, another processing device, vehicle device, or wearable device that are connected to a wireless modem, or the like. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus, for example, a chip system, that can support the terminal in implementing this function. The apparatus may be installed in the terminal. In this embodiment of this application, the chip system may include a chip, or may include a chip and another discrete component.

The network device in embodiments of this application includes a base station (base station, BS), and may be a device that is deployed in a radio access network and that can perform wireless communication with the terminal. The base station may be in a plurality of forms, such as a macro base station, a micro base station, a relay station, and an access point. For example, the base station in embodiments of this application may be a base station in 5G or a base station in LTE. The base station in 5G may also be referred to as a transmission reception point (transmission reception point, TRP) or a gNB. In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus for implementing the function of the network device is a network device and the network device is a base station.

The following describes embodiments of this application in detail with reference to the accompanying drawings. It should be understood that, in the following embodiments, terms such as "first" and "second" are merely intended to distinguish between different objects, and should not constitute any limitation on this application.

In addition, in embodiments of this application, a first base station may be a 5G base station, and correspondingly, a second base station is a 4G base station. Alternatively, the first base station may be a 4G base station, and the second base station may be a 5G base station. This is not limited in this application.

In addition, in embodiments of this application, a first carrier and a second carrier may belong to a same base station, or may belong to different base stations, that is, are applicable to different communication scenarios. This is not limited in this application.

For ease of understanding embodiments of this application, the following first briefly describes several terms in this application.

Zero-power resource element (Zero-Power Resource Element, ZP-RE) or muted resource element (Muted Resource Element, MRE): is a resource element that does not need to generate and map a signal, and may be used for rate matching of a physical downlink shared channel (Physical Downlink Shared Channel, PDSCH). In other words, for an NR system, a position of an RE that sends an LTE signal but does not send an NR signal may be set to the ZP-RE. The ZP-RE may be a time-frequency resource located in an overlapping area between an LTE carrier and an NR carrier. On the time-frequency resource, a base station in the NR system does not send power or sets a transmit power to zero, and UE in NR does not receive a signal at the position or sets a receive power to zero. However, a base station and UE in an LTE system may communicate with each other through the specific time-frequency resource. For NR, the ZP-RE may also be referred to as a null RE.

Reference signal pattern: is two-dimensional distribution of an RE in which a reference signal is located in a time-frequency domain.

Reconfiguration fuzzy period: is a time period in which the UE and the base station, and an LTE side and an NR side have different understandings of REs that need to be avoided during batch reconfiguration of users.

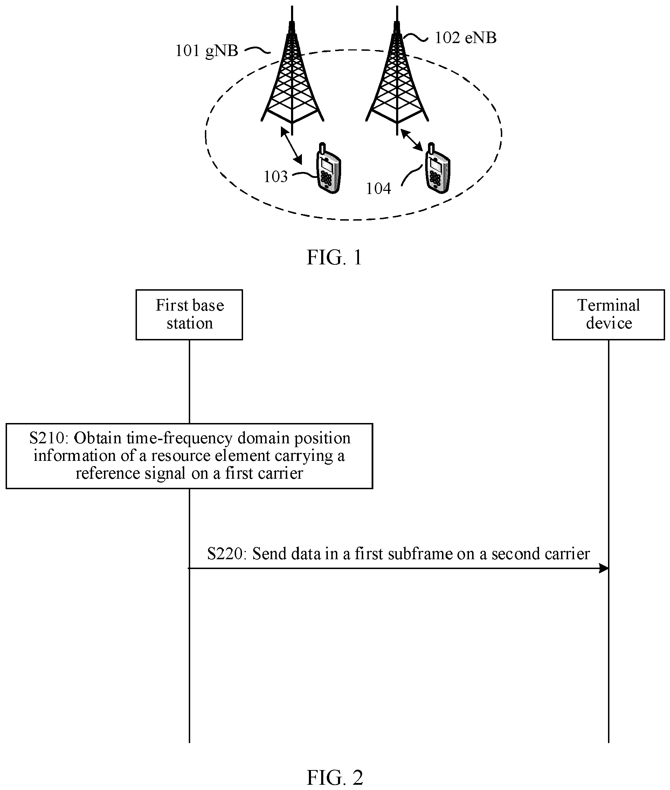

FIG. 1 is a schematic diagram of a wireless communication system 100 according to an embodiment of this application.

As shown in the figure, the communication system 100 may include two network devices such as network devices 101 and 102 shown in FIG. 1. The communication system 100 may further include two terminal devices such as terminal devices 103 and 104 shown in FIG. 1. The terminal device 103 may establish radio link to the 5G network device 101 by a dual connectivity (dual connectivity, DC) technology or a multi-connectivity technology, and the terminal device 104 may establish radio link to the 4G network device 102 by the dual connectivity (dual connectivity, DC) technology or the multi-connectivity technology.

It should be understood that, in this embodiment of this application, a wireless connection may be established between a terminal device and a network device, and between terminal devices for wireless communication. A sending device may indicate scheduling information of data by control information, so that a receiving device correctly receives data based on the control information. The network device 101 may be a primary base station, and the network device 102 may be, for example, a secondary base station. In this case, the network device 101 is a network device upon initial access of the terminal device 103, and is responsible for radio resource control (radio resource control, RRC) communication with the terminal device 103. The network device 102 may be added during RRC reconfiguration, and is configured to provide an additional radio resource. Alternatively, the network device 101 may be a 4G network device, and the network device 102 may be a 5G network device. This is not limited in this application. In addition, in this embodiment of this application, the 4G network device and the 5G network device may be a same one. In this case, the network device may send or receive an LTE carrier, and may also send or receive an NR carrier simultaneously. This is not limited in this application.

It should be understood that, in FIG. 1, the terminal device 103 is connected to the network device 101, that is, the terminal device and the network device operates through an NR standard spectrum, and the terminal device 104 is connected to the network device 102, that is, the terminal device and the network device operates through an LTE standard spectrum. In addition, in this embodiment of this application, the terminal devices may be a same terminal device, that is, the terminal device may support two standards of LTE and NR. This is not limited in this application.

In addition, in this application, the communication system 100 may include at least one network device. The NR side and an NR cell/carrier may belong to a same base station. In addition, the LTE side and an LTE cell/carrier may be understood as a same concept, and the NR side and the NR cell/carrier may be understood as a same concept. The LTE side and the LTE cell/carrier may alternatively belong to different base stations. When this application is used in a scenario of one base station, the base station may not only send a carrier in the NR standard spectrum, but also send a carrier in the LTE standard spectrum. Therefore, the first carrier and the second carrier in this application are not limited to being sent by two base stations or one base station. That is, this is not limited in this application.

For ease of description, the following first describes a physical frame in air interface communication by using a frame structure in the LTE and NR systems as an example.

A physical frame usually refers to a protocol data unit of a data link layer. The physical frame includes several parts that perform different functions. A frame structure refers to a frame that can form different repetition periods based on different transmitted information. To satisfy a requirement of uplink and downlink time conversion in time division multiplexing, a dedicated radio frame structure is designed in TD-LTE. In a TD-LTE time domain, there are two frame structures for simultaneous transmission in a periodic manner and configured with standard quantities of uplink and downlink subframes: a radio frame and a half-frame. Duration of a radio frame is 10 ms, duration of a half-frame is 5 ms, and one radio frame includes two half-frames. Each half-frame includes five subframes each with a duration of 1 ms, each subframe includes two slots each with a duration of 0.5 ms, and each slot may include six or seven CP+OFDM symbols based on different durations of cyclic prefixes CPs.

Compared with a 4G fixed frame structure, flexibility is a most prominent feature of a 5G frame structure. A layered structure including two parts, a fixed architecture and a flexible architecture, is adopted in the 5G frame. The fixed architecture is the same as that in 4G, and includes a radio frame with a duration of 10 ms and subframes with a duration of 1 ms. Each frame is divided into two half-frames. A first half-frame includes subframes 0 to 4, and a second half-frame includes subframes 5 to 9. Each subframe includes several slots.

In an LTE system or an NR system, a system frame sequence number (system frame number, SFN) may range from 0 to 1023, that is, a basic data sending period is 1024 frames. A subframe number ranges from 0 to 9, that is, a sending period of a part of control information is 10 subframes.

In this embodiment of this application, the first carrier may be an LTE carrier, and the second carrier may be an NR carrier. Alternatively, the first carrier may be an NR carrier, and the second carrier may be an LTE carrier.

In this embodiment of this application, that the base station schedules a subframe means that the base station schedules uplink or downlink data in the subframe. That the base station does not schedule or stops scheduling a subframe means that the base station does not schedule uplink or downlink data in the subframe, but still possibly sends a reference signal or the like.

FIG. 2 is a schematic flowchart of a communication method 200 according to an embodiment of this application.

S210: A base station obtains time-frequency domain position information of a resource element carrying a reference signal on a first carrier.

Specifically, when an LTE cell and an NR cell are co-sited, that is, the base station may communicate with a terminal through an LTE carrier or an NR carrier. The reference signal carried on the first carrier may be generated by the base station and serve one or more terminal devices. In this case, the base station may individually determine the time-frequency domain position information of the resource element carrying the reference signal on the first carrier.

S220: The base station sends, in a first subframe on a second carrier, data to the terminal, where the first subframe is any subframe except a subframe in which the resource element carrying the reference signal is located.

Specifically, when the base station sends the second carrier to the terminal device, the base station stops, based on the obtained time-frequency domain position information of the resource element carrying the reference signal on the first carrier, scheduling the subframe in which the resource element carrying the reference signal is located, and sends data on another subframe.

For example, the base station determines that the subframe in which the resource element carrying the reference signal on the first carrier is located is a subframe n. When the base station sends data on the second carrier, the base station avoids the subframe n, and sends, on another subframe, data carried on the second carrier.

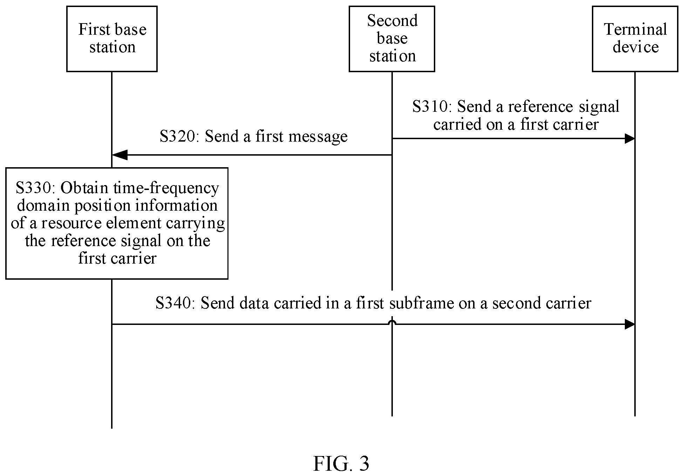

It should be understood that, the base station may alternatively obtain, based on a first message sent by another base station, the time-frequency domain position information of the resource element carrying the reference signal on the first carrier, for example, as shown in a schematic flowchart of a communication method 300 described in FIG. 3.

S310: A second base station sends the reference signal carried on the first carrier to the terminal device.

S320: The second base station sends a first message to the first base station, where the first message includes the time-frequency domain position information, sent by the second base station to the terminal device, of the resource element carrying the reference signal on the first carrier.

Specifically, when an LTE cell and an NR cell are not co-sited, that is, there is a scenario in which an LTE base station and an NR base station are co-deployed. In this case, the first base station may be the LTE base station, or may be the NR base station. Similarly, when an LTE cell and an NR cell are co-sited, the first base station may be an LTE base station, or may be an NR base station. This is not limited in this application.

It should be noted that there is no strict sequence between the two steps S310 and S320, and a sequence of actions cannot be represented based on values of the numbers. In other words, the second base station may first send, to the first base station, the time-frequency domain position information of the resource element carrying the reference signal on the first carrier, and then send the reference signal carried on the first carrier to the terminal device.

After the first base station receives the first message sent by the second base station, the first base station performs step 220 of the method 200 shown in FIG. 2, that is, the first base station sends data carried in the first subframe on the second carrier to the terminal device, where the first subframe is any subframe except the subframe in which the resource element carrying the reference signal is located.

In other words, when sending data to the terminal device, the first base station stops scheduling the subframe in which the resource element carrying the reference signal on the first carrier is located. The first base station may send data on any another subframe.

For example, the base station determines that the subframe in which the resource element carrying the reference signal on the first carrier is located is a subframe n. When the base station sends data on the second carrier, the base station avoids the subframe n. The first base station may send, on any another subframe, data carried on the second carrier.

It should be noted that, in this embodiment of this application, the first message may be a cross standard communication message or another message used for communication between the first base station and the second base station. This is not limited in this application.

Therefore, according to the communication method provided in this embodiment of this application, because the base station stops scheduling the subframe of the resource element carrying the reference signal on the second carrier, when sending the second carrier, the base station can avoid interference from the RE in which the reference signal is located, thereby reducing conflicts between LTE and NR spectrums upon spectrum sharing.

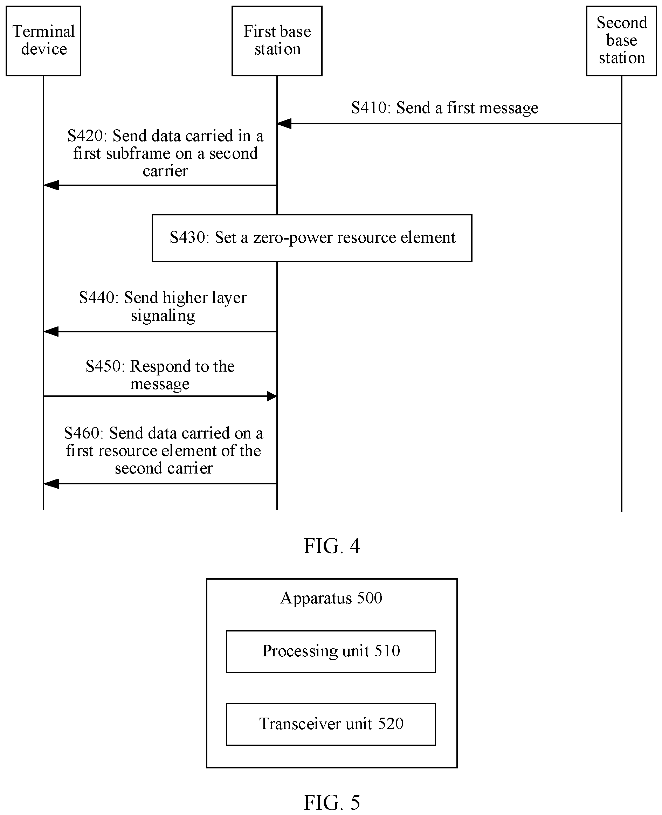

FIG. 4 is a schematic flowchart of another communication method 400 according to an embodiment of this application.

In this embodiment, the method is described by using an example in which an LTE cell and an NR cell are not co-sited.

S410: A second base station sends, to a first base station through a first message, time-frequency domain position information of a resource element carrying a reference signal on a first carrier.

The first message includes the time-frequency domain position information of the resource element carrying the reference signal on the first carrier.

S420: The first base station sends data carried on a first subframe of the second carrier to a terminal device.

Specifically, the first base station obtains, through the first message, the time-frequency domain position information of the resource element carrying the reference signal on the first carrier, and sends, on a subframe except a subframe of the resource element carrying the reference signal, that is, the first subframe, data carried on the second carrier to the terminal device.

S430: The first base station sets a corresponding resource element on the second carrier to a zero-power resource element based on the received time-frequency position information of the resource element of the reference signal.

S440: The first base station sends position information of the zero-power resource element to the terminal device through a second message.

S450: The terminal device sends a third message to the first base station, where the third message indicates that the terminal device has completed configuration of the zero-power resource element.

S460: The first base station sends, on a first resource element of the second carrier, data to the terminal device. The first resource element is any resource element except the resource element carrying the reference signal in the subframe in which the resource element carrying the reference signal is located.

Specifically, after the first base station determines that the terminal device completes the configuration of the zero-power resource element, when sending data to the terminal device, the first base station may reduce interference from the reference signal and data by the zero-power resource element instead of stopping scheduling the subframe of the resource element carrying the reference signal on the first carrier.

It should be understood that, this embodiment of this application may be used in an initial establishment process of the first base station. When the first base station is in the initial establishment process, the first base station receives, for the first time, the time-frequency position information of the resource element of the reference signal that is sent by the second base station. In other words, in this embodiment of this application, when the first base station receives, for the first time, the first message from the second base station, the first base station stops scheduling the subframe of the resource element carrying the reference signal to reduce signal interference.

Optionally, this embodiment of this application may be further used in a batch reconfiguration process of terminal devices. The batch reconfiguration process of the terminal devices occurs after a time-frequency position of the resource element of the reference signal of the second base station is changed. To reduce interference, the first base station needs to first determine that the time-frequency position of the resource element of the reference signal of the second base station is changed, and then reset a zero-power resource element based on the changed time-frequency position of the resource element of the reference signal. Therefore, the first message may include the changed time-frequency position information of the resource element of the reference signal of the second base station.

In other words, the method in this embodiment of this application may be applied upon initial configuration of the zero-power resource element by the base station, or may be applied upon reconfiguration of the zero-power resource element. This is not limited in this application.

It should be noted that, when there is an overlapping area between the first carrier and the second carrier in this embodiment of this application, the method in this embodiment of this application may be implemented in the overlapping area. In this case, in the overlapping area between the first carrier and the second carrier, the time-frequency domain position of the resource element carrying the reference signal on the first carrier is actually a time-frequency position same as that of the set resource element corresponding to the second carrier.

It should be understood that, in this embodiment, if the terminal device completes the configuration of the zero-power resource element, the terminal device may not send the third message to the first base station.

Optionally, in this embodiment of this application, the reference signal may be a channel state information reference signal (Channel State Information Reference Signal, CSI-RS). Alternatively, the reference signal may be another reference signal in an LTE system or an NR system, for example, may be another reference signal in both the LTE system and the NR system. This is not limited in this application.

In addition, in this embodiment of this application, the second message sent by the first base station to the terminal device is not limited in this application, and may be higher layer signaling, for example, may be radio resource control (Radio Resource Control, RRC) signaling or other signaling.

According to the communication method provided in this embodiment of this application, during batch reconfiguration of users, the first base station stops scheduling the subframe of the resource element carrying the reference signal on the first carrier, to reduce spectrum conflicts between the first base station and the second base station that are caused when the resource element occupied by the reference signal is changed.

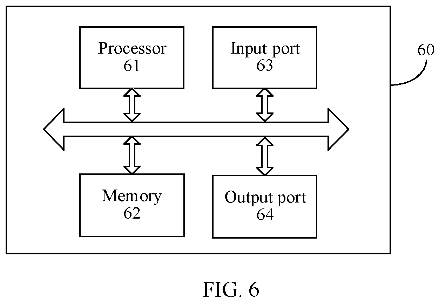

The methods provided in embodiments of this application are described above in detail with reference to FIG. 2 to FIG. 4. The following describes a communication apparatus according to an embodiment of this application in detail with reference to FIG. 5 and FIG. 6.

FIG. 5 is a schematic block diagram of a communication apparatus according to an embodiment of this application. As shown in FIG. 5, the apparatus 500 may include a processing unit 510 and a transceiver unit 520.

The processing unit 510 is configured to obtain time-frequency domain position information of a resource element carrying a reference signal on a first carrier.

The transceiver unit 520 is configured to send, in a first subframe on a second carrier, data to a terminal, where the first subframe is a subframe except a subframe in which the resource element carrying the reference signal is located. Optionally, the transceiver unit 520 may be further configured to receive a first message sent by a second base station, where the first message includes the time-frequency domain position information of the resource element carrying the reference signal on the first carrier of the second base station. In this case, the processing unit 510 of the apparatus is specifically configured to obtain, based on the first message, the time-frequency domain position information of the resource element carrying the reference signal on the first carrier.

Optionally, when the processing unit 510 determines that the time-frequency domain position information of the resource element carrying the reference signal on the first carrier is changed, the processing unit stops scheduling the subframe in which the resource element carrying the reference signal is located.

Optionally, the processing unit 510 of the apparatus in this embodiment is further configured to set a corresponding resource element on the second carrier to a zero-power resource element based on the time-frequency domain position information of the resource element carrying the reference signal on the first carrier. In this case, the transceiver unit 520 is further configured to send a second message to the terminal device, where the second message includes time-frequency domain position information of the zero-power resource element, and indicates the terminal device not to receive, on the zero-power resource element, data on the second carrier.

Similarly, the second message sent by the transceiver unit to the terminal device is not limited in this application, and may be higher layer signaling, for example, may be radio resource control (Radio Resource Control, RRC) signaling or other signaling.

In addition, the transceiver unit 520 of the apparatus is further configured to receive a third message sent by the terminal device, where the third message indicates that the terminal device has completed configuration of the zero-power resource element.

Optionally, the third message may be a response message sent by the terminal device.

Optionally, the reference signal received by the transceiver unit 520 or the reference signal processed by the processing unit includes a channel state information reference signal CSI-RS.

According to the foregoing methods, FIG. 6 is a schematic diagram of a communication apparatus 60 according to an embodiment of this application.

The apparatus 60 may include a processor 61 (that is, an example of a processing unit) and a memory 62. The memory 62 is configured to store instructions, and the processor 61 is configured to execute the instructions stored in the memory 62, so that the apparatus 60 implements the steps performed by the network device in the methods corresponding to FIG. 2, FIG. 3, or FIG. 4.

Further, the apparatus 60 may further include an input port 66 (that is, an example of a transceiver unit) and an output port 64 (that is, another example of the transceiver unit). Further, the processor 61, the memory 62, the input port 66, and the output port 64 may communicate with each other through an internal connection path, to transmit a control and/or data signal. The memory 62 is configured to store a computer program. The processor 61 may be configured to invoke the computer program from the memory 62 and run the computer program, to control the input port 66 to receive a signal, and control the output port 64 to send a signal, so as to complete the steps of the network device in the foregoing methods. The memory 62 may be integrated into the processor 61, or may be disposed separately from the processor 61.

Optionally, if the communication apparatus 60 is a communication device, the input port 66 is a receiver, and the output port 64 is a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 60 is a chip or a circuit, the input port 66 is an input interface, and the output port 64 is an output interface.

In an implementation, functions of the input port 66 and the output port 64 may be implemented by a transceiver circuit or a dedicated transceiver chip. The processor 61 may be implemented by a dedicated processing chip, a processing circuit, a processor, or a general-purpose chip.

In another implementation, the communication device provided in this embodiment of this application may be implemented by a general-purpose computer. To be specific, program code that is used to implement functions of the processor 61, the input port 66, and the output port 64 is stored in the memory 62, and a general-purpose processor executes the code in the memory 62 to implement the functions of the processor 61, the input port 66, and the output port 64.

Units or a unit in the communication apparatus 60 may be configured to perform actions or processing processes that are performed by the network device in the foregoing methods. To avoid repetition, details are not described herein again.

For concepts, explanations, detailed descriptions, and other steps of the apparatus 60 that are related to the technical solutions provided in embodiments of this application, refer to the descriptions of the content in the foregoing methods or other embodiments. Details are not described herein again.

This application further provides a computer-readable storage medium. The computer-readable storage medium stores instructions. When the instructions are run on a computer, the computer is enabled to perform the steps performed by the network device in the methods shown in FIG. 2 to FIG. 4.

This application further provides a computer program product including instructions. When the computer program product is run on a computer, the computer is enabled to perform the steps performed by the network device in the methods shown in FIG. 2 to FIG. 4.

It should be understood that, the processor in embodiments of this application may be a central processing unit (central processing unit, CPU), the processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include both a volatile memory and a nonvolatile memory. The nonvolatile memory may be a read-only memory (Read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random access memory, RAM), and is used as an external cache. Through examples but not limitative descriptions, many forms of random access memories (Random access memory, RAM) may be used, for example, a static random access memory (Static RAM, SRAM), a dynamic random access memory (DRAM), a synchronous dynamic random access memory (Synchronous DRAM, SDRAM), a double data rate synchronous dynamic random access memory (Double data rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus dynamic random access memory (Direct rambus RAM, DR RAM).

All or some of the foregoing embodiments may be implemented by software, hardware, firmware, or any combination thereof. When software is used for implementation, the foregoing embodiments may be implemented completely or partially in a form of a computer program product. The computer program product includes one or more computer instructions or computer programs. When the computer instructions or the computer programs are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing systems, apparatuses, and units, refer to corresponding processes in the foregoing method embodiments. Details are not described herein again. In the several embodiments provided in this application, it should be understood that the disclosed systems, apparatuses, and methods may be implemented in other manners. For example, the described apparatus embodiment is merely an example. For example, division into the units is merely logical function division and there may be other division manners in actual implementation. For example, a plurality of units or components may be combined or integrated into another system, or some features may be ignored or not performed. In addition, the displayed or discussed mutual couplings or direct couplings or communication connections may be implemented by some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (that may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first base station, time-frequency domain position information of a resource element carrying a reference signal on a first carrier; and
sending, by the first base station in a first subframe on a second carrier, data to a terminal device, wherein the first subframe is any subframe except a subframe in which the resource element carrying the reference signal is located.

2. The method according to claim 1, wherein a second base station communicates with the terminal device through the first carrier, wherein the obtaining, by a first base station, time-frequency domain position information of a resource element carrying a reference signal on a first carrier comprises:
receiving, by the first base station, a first message sent by the second base station, wherein the first message comprises the time-frequency domain position information of the resource element carrying the reference signal on the first carrier; and
obtaining, by the first base station based on the first message, the time-frequency domain position information of the resource element carrying the reference signal on the first carrier.

3. The method according to claim 1, wherein the first base station communicates with the terminal device through the first carrier and the second carrier, wherein the obtaining, by a first base station, time-frequency domain position information of a resource element carrying a reference signal on a first carrier comprises:
determining, by the first base station individually, the time-frequency domain position information of the resource element carrying the reference signal on the first carrier.

4. The method according to any one of claims 1 to 3, wherein the sending, by the first base station in a first subframe on a second carrier, data to a terminal device comprises:
determining, by the first base station, that the time-frequency domain position information of the resource element carrying the reference signal on the first carrier is changed; and
sending, by the first base station in the first subframe on the second carrier, data to the terminal device.

5. The method according to any one of claims 1 to 4, wherein the method further comprises:
setting, by the first base station, a corresponding resource element on the second carrier to a zero-power resource element based on the time-frequency domain position information of the resource element carrying the reference signal on the first carrier; and
sending, by the first base station, a second message to the terminal device, wherein the second message comprises time-frequency domain position information of the zero-power resource element, and the second message indicates the terminal device not to receive, on the zero-power resource element, data on the second carrier.

6. The method according to claim 5, wherein the method further comprises:
receiving, by the first base station, a third message sent by the terminal device, wherein the third message indicates that the terminal device has completed configuration of the zero-power resource element; and
sending, by the first base station on a first resource element of the second carrier, data to the terminal device, wherein the first resource element is any resource element except the resource element carrying the reference signal in the subframe in which the resource element carrying the reference signal is located.

7. The method according to any one of claims 1 to 6, wherein the reference signal comprises a channel state information reference signal CSI-RS.

8. A communication apparatus, comprising:
a processing unit, wherein the processing unit is configured to obtain time-frequency domain position information of a resource element carrying a reference signal on a first carrier; and
a transceiver unit, wherein the transceiver unit is configured to send, in a first subframe on a second carrier, data to a terminal device, wherein the first subframe is any subframe except a subframe in which the resource element carrying the reference signal is located.

9. The apparatus according to claim 8, wherein a second base station communicates with the terminal device through the first carrier, wherein
the transceiver unit is further configured to receive a first message sent by the second base station, wherein the first message comprises the time-frequency domain position information of the resource element carrying the reference signal on the first carrier; and
the processing unit is specifically configured to obtain, based on the first message, the time-frequency domain position information of the resource element carrying the reference signal on the first carrier.

10. The apparatus according to claim 8, wherein the apparatus communicates with the terminal device through the first carrier and the second carrier, wherein that the processing unit obtains the time-frequency domain position information of the resource element carrying the reference signal on the first carrier comprises:
the processing unit individually determines the time-frequency domain position information of the resource element carrying the reference signal on the first carrier.

11. The apparatus according to any one of claims 8 to 10, wherein
the processing unit is further configured to determine that the time-frequency domain position information of the resource element carrying the reference signal on the first carrier is changed; and
the processing unit sends, in the first subframe on the second carrier, data to the terminal device.

12. The apparatus according to any one of claims 8 to 11, wherein
the processing unit is further configured to set a corresponding resource element on the second carrier to a zero-power resource element based on the time-frequency domain position information of the resource element carrying the reference signal on the first carrier; and
the transceiver unit is further configured to send a second message to the terminal device, wherein the second message comprises time-frequency domain position information of the zero-power resource element, and the second message indicates the terminal device not to receive, on the zero-power resource element, data on the second carrier.

13. The apparatus according to claim 12, wherein
the transceiver unit is further configured to receive a third message sent by the terminal device, wherein the third message indicates that the terminal device has completed configuration of the zero-power resource element; and
the apparatus sends, on a first resource element of the second carrier, data to the terminal device, wherein the first resource element is any resource element except the resource element carrying the reference signal in the subframe in which the resource element carrying the reference signal is located.

14. The apparatus according to any one of claims 8 to 13, wherein the reference signal comprises a channel state information reference signal CSI-RS.

15. A communication apparatus, comprising:
a memory, wherein the memory is configured to store a computer program; and
a processor, wherein the processor is configured to execute the computer program stored in the memory, to enable the device to perform the method according to any one of claims 1 to 7.

16. A computer readable medium, comprising a computer program or instructions, wherein when the computer program or the instructions are run on a computer, the computer is enabled to perform the method according to any one of claims 1 to 7.

17. A communication apparatus, wherein the communication apparatus is configured to perform the method according to any one of claims 1 to 7.

18. A communication apparatus, comprising at least one processor and an interface circuit, wherein an involved computer program is executed in the at least one processor, to enable the communication apparatus to perform the method according to any one of claims 1 to 7.

19. A computer program product, wherein the computer program product comprises computer program code, and when the computer program code is run on a computer, the computer is enabled to perform the method according to any one of claims 1 to 7.
